# EUROPEAN PATENT SPECIFICATION

(11) **EP 2 092 710 B1**
(45) Date of publication and mention of the grant of the patent: **20.03.2013**
(21) Application number: 06794876.0
(22) Date of filing: 23.10.2006
(51) Int. Cl.: H04L 29/06

(54) **SYSTEM AND METHOD FOR REMOTE FORENSIC ACCESS**
SYSTEM UND VERFAHREN FÜR FERNKRIMINALTECHNISCHEN ZUGANG
SYSTÈME ET PROCÉDÉ POUR UN ACCÈS LÉGAL À DISTANCE

(43) Date of publication of application: 26.08.2009
(73) Proprietor: Evidence Talks Limited, London NW8 8NQ (GB)
(72) Inventor: SHELDON, Andrew David, Milton Keynes MK7 8QD (GB); COETZEE, Floris Petrus, Milton Keynes MK12 5BB (GB); BATEMAN, Liam Peter, Milton Keynes MK7 6DT (GB)
(74) Representative: Turner, Richard Charles
(86) International application number: PCT/GB2006/003940
(87) International publication number: WO 2008/050073

(56) References cited:
- WO-A-03/038643
- US-A1- 2006 234 772

## Description

This invention relates to a system and method for providing remote access to a target device. The invention provides a method and technical architecture for controlling, managing and enabling secure forensic examinations and/or the recovery of data from remote storage media via a network, without installing anything on the examination target systems.

Digital forensic examinations are performed in order to obtain evidence related to criminal offences or abuse of corporate or home based computing (IT) systems. There are a number of globally accepted principles which apply to performing digital forensic examinations. Foremost of these are the need to prevent changes to the data being examined and to maintain a record of actions taken during the examination. In many circumstances, the speed of forensic response is also critical.

Performing digital forensic'analysis requires specialist software and hardware as well as skilled and trained staff. In circumstances where a skilled forensic analyst is able to gain physical access to the computer containing the media to be examined, it is common practice to remove the media to be examined and connect it to a forensic imaging device via an interface that is designed specifically to prevent changes being made to the device being examined. This type of device is commonly referred to as a "write blocker" and its purpose is to maintain the integrity of the data being examined by preventing any changes being made to it during the forensic imaging or analysis process.

However, it is often the case that the digital media requiring examination is physically located a great distance from such specialist skills and equipment. This can result in a delay responding to the incident while the skilled staff travel to the site of the incident with the appropriate hardware and software and there are additional costs associated with such travel. Additionally, the number of skilled forensic staff available is often limited, making reacting to multiple locations within a reasonable time scale impractical and costly.

There are a number of existing alternatives that do not rely on the forensic analyst physically travelling to the location of the computer requiring examination with the appropriate software and hardware.

One solution is to pre-install specialist remote access, and/or analysis software, on every computer likely to be the subject of forensic examination, before the event and to ensure that this specialist software is loaded every time the computer is started. Subsequently, when forensic examination is required, a remote forensic analyst with appropriate network authority and credentials is able to connect to the computer requiring examination, via a network using the specialist remote access and or analysis software.

Another solution is to deliver specialist remote access and or analysis software to the computer requiring examination on demand and once it becomes known that a device requires examination. Such software may be delivered via a network, or installed via personal intervention by someone local to the computer. This method requires that the specialist software occupies space in either the volatile memory of the computer or on the storage media which is possibly the subject of the examination. Subsequent to its installation, the software enables the remote forensic analyst to access the computer from a remote location via a network.

Yet another solution involves the removal of the storage media, by local resources, from the computer in which it is installed and shipping that media to the location of the forensic analyst. Once in the physical possession of the forensic analyst, normal forensic techniques and methods can be deployed.

There are several drawbacks to all of the current known solutions. For example, the solution which involves shipping the media to be examined to the remote forensics analyst incurs delays in transportation time and possible loss or damage in the transit system. Further, it may not be possible to maintain the evidential continuity generally required for legal proceeding unless the device is hand carried from point to point. Evidential continuity is the process by which access to items of evidential value is carefully logged and auditable. Further, it may require that every person coming into contact with the evidential device may be required to produce a witness statement to that effect. Clearly, if the device has been transported by an international courier using normal means, it may not be possible to obtain such continuity assurances from all the people that may have come into contact with it.

The other known solutions that rely on special remote access and or analysis software being installed on the computer that is the subject of the examination all suffer drawbacks. In the solution where the special access and or analysis software is pre-installed, then this solution only works if the computer to be examined has previously had the special remote access and or analysis software installed. The organisation installing such a solution must perform careful planning and testing to ensure that the specialist remote access software does not interfere with the normal operation of the computer on which it is installed. In large organisations, such testing and evaluation often takes considerable time before the solution can be deployed. Such a solution also further requires a comprehensive change control system to be in place within the organisation to ensure that any updates to the specialist remote access and or analysis software are made available in a timely and appropriate manner. Finally, as every computer that has the solution installed on it is effectively allowing itself to be remotely accessed via the network at any time, this solution leaves every computer on which it is installed vulnerable to abuse if access to the controlling analysis systems is compromised.

In the solution where the special access software is installed on demand, then in order for the software to operate, the software must be loaded into the volatile memory of the computer. If the computer is running at the time the software is delivered, the software will change the contents of the volatile memory of the computer on which it is run which is contrary to the generally accepted principle that the process of forensic examination should not change the data being examined. Another problem is that if the computer is running at the time the software is delivered and if the software is delivered to the computer being examined via a removable storage device such as a DVD, CD or USB storage device the act of connecting such a device to the computer requiring examination is likely to result in a change to the contents of the system hard disk which is contrary to the generally accepted principle that the process of forensic examination should not change the data being examined.

In both solutions where the special access and or analysis software is installed on the target computer, then the solutions do not work if the target computer is not connected to a network. Computers that do not have network connections cannot be accessed using these solutions. In addition, the forensic analyst must either use tools and utilities installed on their remote computer or install such tools onto the hard disk being examined or into the memory of the target computer. Both these choices are contrary to the generally accepted principle that the process of forensic examination should not change the data being examined. Likewise, if a forensic image of the media in the target computer is required, the data from the media must be transferred over a network to a storage device under the control of the forensic analyst. Whilst this is possible it may greatly increase the volume of traffic on the network to which the target computer is attached resulting in possible degradation of network performance to other users of the network. Computers that are non functional cannot be examined using these methods as they are unable to run the special remote access software or sustain a network connection.

WO 03/038643 discloses a read-only storage device having network interface, a system including the device and a method of distributing files over a network.

It is therefore an object of the invention to improve upon the known art.

According to a first aspect of the present invention, there is provided a system for providing remote access to a storage device of a target device comprising a network, a workstation for examining the storage device from the target device comprising a write protected device interface for receiving the storage device, a processor connected to the device interface and arranged to execute one or more forensic analysis services on the storage device and a gateway device connected to the processor and arranged to create and to manage secure private connections to and from the processor over the network, and a remote device comprising a network interface for connecting to the network, and a processor connected to the network interface and arranged to transmit instructions to control the execution of one or more forensic analysis services of the workstation on the storage device.

According to a second aspect of the present invention, there is provided a method of operating a system for providing remote access to a storage device of a target device comprising receiving the storage device from the target device at a write protected device interface of a workstation, establishing a secure and private connection, over a network, between a network interface of a remote device and a gateway device of the workstation, transmitting instructions from the remote device to the workstation to control the execution of one or more forensic analysis services of the workstation on the storage device, and executing one or more forensic analysis services on the storage device at the workstation according to the transmitted instructions.

According to a third aspect of the present invention, there is provided a workstation for examining a storage device from a target device comprising a write protected device interface for receiving the storage device, a processor connected to the device interface and arranged to execute one or more forensic analysis services on the storage device and a gateway device connected to the processor and arranged to create and to manage secure private connections to and from the processor over a network, to maintain a secure connection between the workstation and a remote device and to receive instructions from the remote device to control the execution of one or more forensic analysis services of the workstation on the storage device.

Owing to the invention, it is possible to provide a system, comprising hardware and software, that enables a forensic analyst to perform forensic imaging, analysis and or data recovery on digital or other media located remotely from the forensic analyst, using secure remote access to, and control of, dedicated forensic or data recovery equipment via any network or Internet connection but without the need for the data being processed to be transferred over the network or for anything to be installed on the computer under investigation or for the computer under investigation to be connected to a network and while maintaining an auditable trail of actions, in order to provide evidential continuity.

The invention comprises a system whereby the services can be performed on an item of storage media by removing it from a target computer and placing it in a workstation to which a specifically authenticated user is granted remote access via a secured network connection, managed by a gateway device in the workstation, created specifically for the purpose of performing the services on the storage media located in the specific device.

The invention provides a technical environment in which the services can be performed on storage media removed from a target computer, in one location, by a user located in a different location, over a secure network connection which is specifically and dynamically created for the purpose and without the need to install any software or create any network connection between the remote user and the target computer.

The invention includes a method of allowing an authorised person to access a software application for the purpose of recording details about the services to be performed. The method includes recording the type of services to be performed, selecting the person or organisation who is required to perform the services, identifying the target computer containing the storage media on which the services are to be performed, identifying the specialist equipment to which the storage media requiring the services is to be attached and identifying the person who will be instructed to remove the storage media from the target computer and placing it into the specialist equipment.

The invention includes a method of recording the actions taken by the users of the system for the purpose of maintaining a contemporaneous log of actions to show the sequence of events that led to the services being performed. The invention includes a method of generating a unique digital authority and for distributing this authority to the nominated remote user for the purpose of granting the remote user access to the remote device containing the storage media.

The invention describes a method and technical architecture by which a person with appropriate access rights and authority is given secure remote access, from an Internet or network connected computer located anywhere, to a workstation, which is referred to in this application as a POD, located anywhere, which is configured with appropriate hardware and software to enable the services to be performed on storage media attached to it for the purpose of performing the services.

Embodiments of the present invention will now be described, by way of example only, with reference to the accompanying drawings, in which:-
Figure 1 is a schematic diagram of a workstation,
Figure 2 is a schematic diagram of a management server,
Figure 3 is a schematic diagram of a system for providing remote access to a target device, and
Figure 4 is a flow diagram of a method of operating the system of Figure 3.

In this specification a variety of technical terms are used, and these are defined in the following paragraphs.

The term "services" refers to, but is not restricted to, performing the following tasks:
- Digital Forensics: is the term given to the process of examining digital storage media for the purpose of identifying and analysing data. Commonly, digital forensic examination of storage media may be required when investigating computer systems and or networks that have, for example, been associated with criminal activity or have been the target of abuse or misuse.
- Forensic Imaging: is the process of creating a trusted copy of an item of digital storage media in such a manner that the imaging process is non-invasive to the original media and the process and resultant data can be verified as being an accurate representation of the original media. Following the process of forensic imaging, the resultant data is known as a forensic image.
- Forensic Analysis: is the process of examining the contents of data stored on digital media using specialist software in a way that allows conclusions to be drawn about the data.
- Data Recovery: is the process of identifying and making available data that has become inaccessible to the usual owner or user of the data. Commonly, data recovery is required after accidental or deliberate deletion of data or following a physical or logical failure of the storage media on which the data is stored.

An investigation is the term used to describe the performance of any of the services on a single piece of digital media. A case is the term used to describe one or more investigations. Specialist software is any software that the user may use to perform digital forensic imaging, forensic analysis or data recovery. For the purpose of this document, the term specialist software may also refer to remote access software.

A network is the term used to describe a collection of two or more devices connected using a communications protocol. The Internet is the term used to describe a publicly accessible global network of networks providing access to multiple networked resources. An Intranet is the term used to describe a private network of networks which provides access to selected networked resources. A VPN (Virtual Private Network) is a private data network that makes use of a network infrastructure, maintaining security and privacy through the use of a various protocols and security procedures.

A target computer (or target device) is any device which contains media that has been identified as requiring the services. For the purpose of this application, the term target computer includes any device that has digital storage attached to it and is not restricted to being a PC or other such computing device. Storage media is any device on which data is stored. For the purpose of this document, the term storage media may refer to, but not be limited to, hard disks, floppy disks, CDs and DVDs, USB removable storage devices and other solid state storage devices.

A Digital Certificate is a collection of data that establishes the credentials of an entity when engaging in digital transactions. It is issued by a certification authority (CA). It may contain or be comprised of a name, a serial number, expiration dates, a copy of the certificate holder's public key (used for encrypting messages and digital signatures), and the digital signature of the certificate-issuing authority so that a recipient can verify that the certificate is genuine.

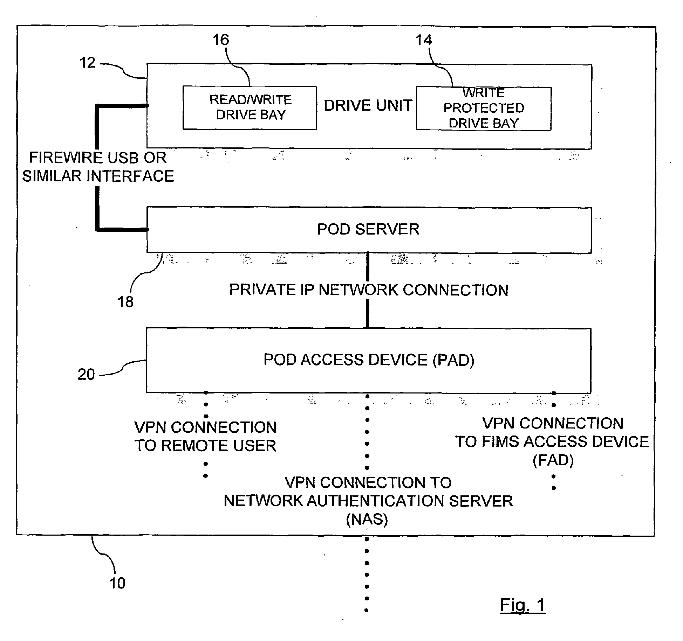

Figure 1 illustrates a workstation 10, which can be considered as a remote "POD". This workstation 10 is a combination of hardware and software which together replicate the functionality of a conventional forensic workstation and write blockers used by a forensic analyst when physically accessing target media.

In order to access the POD 10, the device 10 requires a network connection. In one case the POD 10 can be connected to the Internet and in another case it can be connected to an Intranet. In neither case is it a requirement for the POD 10 to be connected to the network on which the target machine to be examined is attached. Indeed, it is a specific advantage of the system that there does not need to be permanent network access to all (or even one) of the devices that may require examination, in order to gain access to a particular device when that device requires examination.

Specifically, each POD 10 comprises the following principal components:
- One or more drive units 12. The drive unit 12 includes a write protected device interface 14 configured to receive a storage media to be examined, from a target device. The drive unit 12 is optionally configured with a read/write interface 16 to receive and store forensic images of media attached to the write protected interface 14. This allows a copy of the storage device being examined via the interface 14 to be made through the interface 16.
- A server 18. This comprises a computer with a suitable processor configured for performing forensic analysis and/or data recovery, and includes a network card and a suitable interface for connecting to both the drive unit 12 and a PAD. Optionally, a further connection can be provided to a device enabling remote power control and management to the server and or drive unit.
- Pod Access Device (PAD) 20. This gateway device comprises a computer with a suitable configuration to act as both a Virtual Private Network (VPN) client and server, and a router. The gateway device 20 is arranged to create and to manage secure private connections to and from the processor 18 over a network (such as the Internet). Technologies other than a VPN could be used to achieve the same or a similar result, which is to create and manage secure private connections to and from the POD 10. The PAD 20 operates as a gateway device for connecting to a wider network such as the Internet and includes a further network interface for connecting to the server and optionally a further interface for connecting to the power management device. In Figure 1, the three dotted lines coming from the PAD 20 represent 3 logical connections that the PAD can make. In a principal embodiment, these three logical connections would be carried by a single physical connection to the external network.

It is conceivable that the above three components could be facilitated by a single computer acting as the server and the PAD, with the drive units attached.

One or more PODs 10 may be located at convenient locations where it is anticipated that forensic analysis or data recovery may be required. Each POD 10 is accessible, via its respective network connection, independently of each other. The network connection can be via the Internet or via a private network such as an Intranet.

The server component 18 in each POD 10 is configured with software appropriate to the task for which the POD 10 is to be used. These tasks may be, but are not limited to, performing forensic examinations of storage media or the recovery of data from storage media in the event of data loss or the recovery of passwords or decryption of encrypted data. It may be possible to connect multiple storage devices requiring examination to the drive unit 12 of each POD 10.

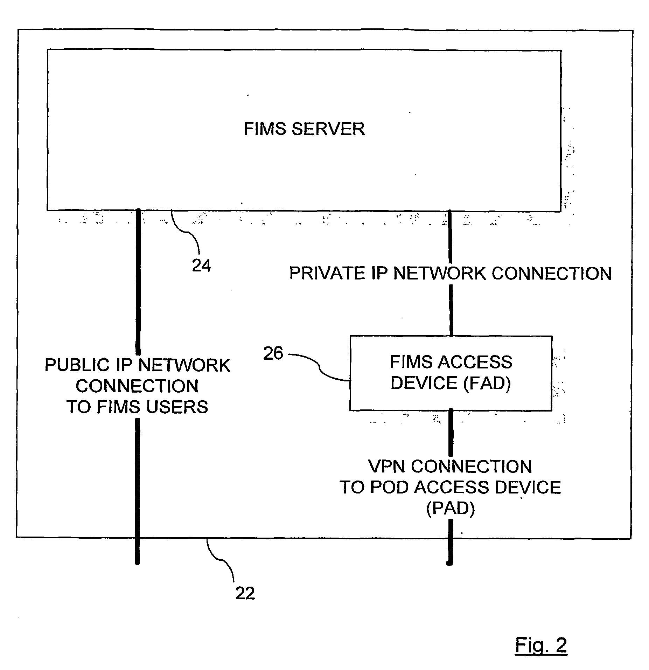

Figure 2 illustrates a second component of the system, being a forensic incident management service which, for the purpose of this document, is called "FIMS". This is hardware and software which together provide an investigation case management system, a POD access control system and a case reporting system. FIMS can be accessed from any computer connected to any appropriate network, including the Internet, providing that the user has an appropriate account supported by FIMS.

The hardware on which FIMS is run can be located anywhere provided it has an appropriate network connection. A single FIMS installation can support one or more PODs 10. Specifically, FIMS contains details of the following, FIMS Customers, Forensic Service Partners (FSPs), and the PODs 10 associated with the FIMS 22.

The management service FIMS 22 comprises the following principal components, a FIMS management server 24, which is a computer with a suitable configuration for running the FIMS application, and a FIMS Access Device (FAD) 26, which is a computer with a suitable configuration to act as a network router and Virtual Private Network (VPN) server. The FIMS server 24 can be any suitable computer with an appropriate operating system.

The FIMS application is database driven, which contains the following entities, in order of level of control on the server:
A FIMS administrator - an account that allows creation and removal of FIMS customer accounts and FIMS customer administrator accounts to a FIMS server. This person can perform any and all functions below it. A FIMS server can support one or more FIMS customers
A FIMS customer administrator - each FIMS customer must have a FIMS customer administrator. This person has the ability to add, edit and remove records relating to the FIMS customer for which they are the administrator. A FIMS customer administrator has overall control and authority over all subordinate FIMS customer accounts.

One or more FIMS customer - a FIMS customer is an entity, typically an organisation, with an account on a FIMS server which is created by the FIMS administrator. Details of the FIMS customer include but are not limited to, organisation name, main office address, details of all locations where the services may be required, details of all customer contacts etc.

One or more FIMS case managers - each FIMS customer can have one or more case managers, who can add, edit and delete cases within their own customer accounts.

One or more FIMS first responders - each FIMS customer can have one or more first responder who is the contact to whom instructions are sent relating to each target computer or storage media that needs obtaining and placing in the POD. The first responder is the person who is tasked with obtaining physical access to the storage media on which the services are to be performed. The first responder physically obtains the storage device to be examined from the target device and inserts that storage media in the write protected interface 14 of the POD 10.

One or more FIMS technical contacts - each FIMS customer can have one or more technical contacts whose function is to provide onsite support for the PODs in the event that they need servicing or any similar operation.

For each FIMS customer, the FIMS server 24 contains the following details, details of PODs - the location and configuration details for each POD to which the FIMS customer is able to gain access, and details of special requirements - including but not limited to details of specialist language, response time, time zone or skills required.

In addition to the details relating to the FIMS customer and PODs, the FIMS server 24 also contains details of the organisation and people with the specialist skills who can provide the services to the client. For the purpose of this application these entities are referred to as the Forensic Service Partner or FSP. Details relating to the FSP include but are not limited to, the FSP organisation, the name and addresses relating to the FSP organisation, and the FSP administrator, the name and contact details for the person responsible for adding, changing and deleting FSP contact details and subordinate FSP accounts.

The management service 22 also includes the FIMS access device (FAD) 26, which is a device running a VPN server that enables secure VPN connectivity between FIMS 22 and a POD 10, allows the POD 10 to securely update FIMS with information about the status of the POD and its activities and allows FIMS to query the status of the POD as required.

The system may also include a Network Authentication Service (NAS) used for Software licence management. It is recognised that to provide the services (at the POD 10) may require the use of specialist software which, in turn, requires access to a licence that is authenticated by an electronic device known as a dongle. Such a dongle can either be connected directly to the POD server 18 or accessed via a connection to a remote device to which the dongle is attached. Optionally, the system can include a secure connection to a device providing software licence authentication or access control for the specialist software installed on the POD server 18.

An example of such a device is the Network Authentication Service (NAS) used by one vendor of forensic software in which an electronic dongle is installed in a computer referred to as the NAS and has associated with it one or more licences for the specific software. Multiple copies of the software may be installed on multiple other computers located at remote locations but each installation must obtain a valid licence by contacting the NAS and being allocated a licence before it can be used.

In summary, the system provides a secure method for entering details about a requirement for services to be performed on items of storage media into a database and software application (FIMS), which in turn identifies an appropriate person or organisation (FSP) to carry out the services together with an appropriate device (POD) into which the storage media can be installed to allow the services to be performed by sending instructions to the POD via a secure network connection created specifically to allow access to the specific POD by the specific FSP.

Additionally, the system provides a method by which instructions relating to physically obtaining the storage media from its original location and making it available for remote access in a POD are created by FIMS using templates and made available to the FSP for transmission to the person acting as the first responder at the location where the storage media is located.

The system further provides a method by which the POD connects to FIMS by way of a specifically created VPN in order to update FIMS with the POD status. The system further provides a method by which reports can be produced from FIMS to provide a step by step chronology of events involved in the provision of the services and detailing the actions taken my the parties involved.

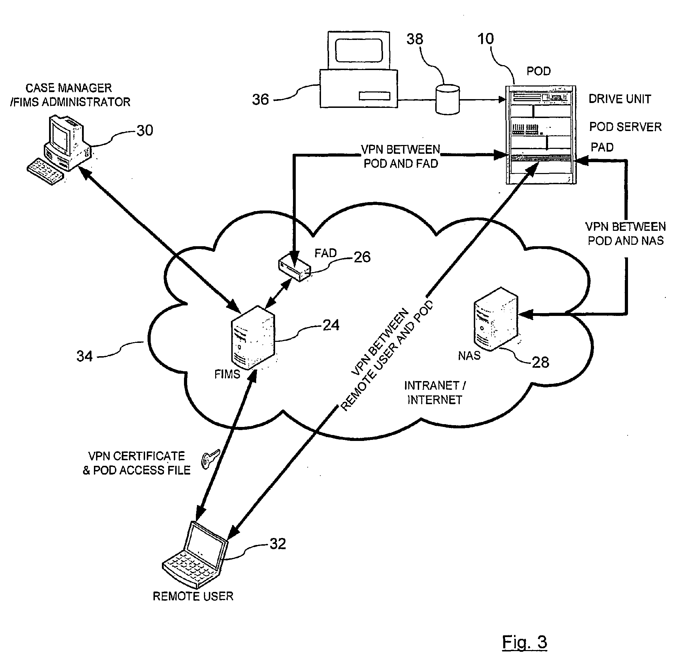

Figure 3 provides an example embodiment of a schematic view of network and technical architecture of the system. The POD 10 is located remotely from the FIMS management server 24 and the access device (FAD) 26. A remote device 32 allows the FSP, who will transmit instructions from a processor of the device 32, to control the execution of one or more services of the workstation 10 on the storage device 38 (from the target device 36) that the POD 10 has received. The network 34 is used to interconnect various components of the system. Included in the embodiment of Figure 3 are the authentication server 28 and a case manager 30.

The case manager 30 (CM) or any other permitted user can connect to the FIMS server 24 using any convenient secure network connection such as HTTPS over a TCP/IP network. Each FIMS server 24 is made available in much the same way as a webserver would be available on the Internet. The management service FIMS requires a correct user name and password before access is permitted to the FIMS server 24.

The remote user 32 such as a forensic service partner (FSP) can also connect to the FIMS server 24 using any convenient secure network connection such as HTTPS over a TCP/IP network. FIMS again requires a correct user name and password before access is permitted by the remote user 32 to the FIMS server 24.

When a connection is required to be made between the remote user 32 and the POD 10, the FIMS server 24 creates two unique files, firstly a "pod access configuration file" (PACF) containing the specific address and other connection details required to create a VPN connection between the remote user 32 and the specific POD Access Device (PAD) 20, and secondly a unique digital certificate (DC) used to authenticate the remote user 32 over the VPN onto the specific POD 10.

The management service FIMS transmits the above two files together with any other files required by the remote user 32 to create the VPN connection to the remote user 32 via any convenient network such as TCP/lP. The files transmitted can optionally be encrypted and or compressed into a single file to improve transmission speed and or security. The management server 24 facilitates a connection between the network interface of the remote device 32 and the gateway device 20 (the PAD) of the workstation 10.

For added security, prior to the remote user 32 attempting to establish connection with a POD 10, the POD server 18 and/or the drive unit 12 may be in a standby mode or powered off. The Pod Access Device (PAD) 20 must always be in a powered on state and able to accept connections via TCP/IP. In such circumstances, the POD server 18 or some other device controlling it must be equipped with capabilities which allow a device to be powered on using command signals transmitted via a TCP/IP network.

In such circumstances, the action of a remote user 32 to establish, using an appropriate digital certificate, a remote connection with a PAD 20 connected to the POD server 18 will result in the PAD 20 transmitting command signals to the controlling interface and initiating the server 18 and/or the drive unit 12 to be powered on. A remote user 32 can only connect to a POD 10 once the remote user 32 is in possession of the appropriate digital certificate and POD access configuration file. Any attempt to connect to the network connections of the PAD 20 without the DC will result in a failure to connect to the POD server 18.

The FIMS server 24 or another trusted computer can be configured as the certificating authority (CA) associated with the production of the digital certificates used to authenticate access to the VPN. The CA generates a unique server DC for each PAD, which is sent to and installed on each PAD by FIMS. The CA later issues a client DC for a specified PAD using the CA credentials for that PAD. At any time, a user with appropriate credentials on the FIMS can request that any issued certificates are revoked. This action has the effect of preventing the revoked certificate from being able to authenticate a connection to a POD 10.

In summary, the method of operating the system for providing remote access to the target device comprising receiving the storage device to be examined at the write protected device interface 14 of the workstation (the POD 10), establishing a secure and private connection over a network between the remote device 32 and the workstation 10, transmitting instructions from the remote device 32 to the workstation 10 (to control the execution of one or more services of the workstation 10 on the storage device), and executing one or more services on the storage device at the POD according to the transmitted instructions.

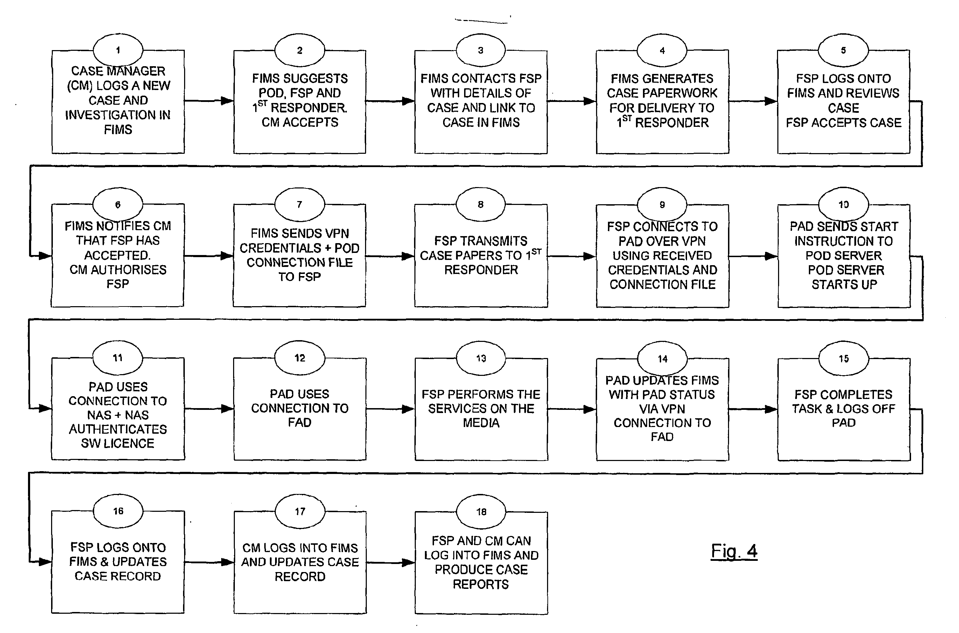

Figure 4 shows the sequence of events, when operating the system, in more detail. For the purpose of this process flow description, it is assumed that all relevant details have previously been entered into FIMS management service. To preserve possible evidential continuity and to enable future reporting of the events in a manner that would be acceptable to forensic principles, FIMS records all actions and data in a database or other structure together with a suitable hash value for the records created and the data entered. The implementation of this hash methodology permits future checking of the data for signs of alteration.

Each step in Figure 4 is numbered and the following is a description of each numbered step, in turn.
1. Using any convenient network connection, the case manager (CM) accesses the FIMS server 24 and logs onto the management service FIMS using a previously configured access account. Using the standard menus and functions of FIMS, the CM creates a new case.
2. Within the new case, the CM enters details of the services required and the location of the target computer and/or storage media requiring the services. Using the details are already stored in its database, FIMS identifies and presents to the case manager, details of the first responders nearest to the location of the storage media, details of the nearest PODs based on geography, time zone or other preference, and details of FSPs, based on preferences such as preferred supplier, geographic location, skill set, time zone or other criteria.
   The CM reviews the options presented by FIMS and has the option of accepting them or modifying them to meet other requirements. When satisfied with the selected options, the CM accepts the data. FIMS records these options in its database.
3. FIMS then contacts the nominated FSP using any suitable communication method such as email, sms or voicemail and delivers the details of the case as provided by the CM together with a link which, if followed in a web browser, will present the FSP with access to the FIMS records for the case. If the FSP elects to use the link provided by FIMS, they will be prompted to log onto the FIMS server 24 using a previously created FSP account.
4. When the details of a case are entered by the CM, FIMS uses these details to create appropriate Case Paperwork (CP) and instructions that are intended to be provided to the first responder, who will be responsible for obtaining physical access to the storage media on which the services are to be applied. These instructions may be based on templates previously configured and stored in FIMS or may be standard instructions that cover basic steps and are not modified dynamically to reflect the actual case details. The instructions are stored in a manner which is associated with the specific case and FIMS provides a method whereby an authorised user can initiate the transmission of the instructions to the first responder.
5. Following receipt of the notification of a case by the FSP, the FSP can either use the link in the notice or can independently log into FIMS using a pre configured log in account and gain access to the case details. The FSP reviews the case details and, if required, uses the contact information associated with the case to contact the CM and discuss the details. Assuming the FSP wishes to conduct the work, the FSP logs into FIMS and is presented with a method for accepting the work.
6. Following the FSP taking the above action to accept the case, FIMS may notify the CM that the FSP has accepted. Alternatively, the CM can log into FIMS and review the case to determine if the FSP has accepted. The CM completes the case acceptance process by using a method presented by FIMS to authorise the FSP to conduct the work.
7. Following the CM completing the FSP authorisation step, FIMS generates a unique digital certificate using the credentials of the Certificating Authority (CA) which will only authenticate the user of the certificate to gain access to a specific POD. Additionally, FIMS generates a unique POD access configuration file (PACF) which contains details such as an IP address and a port number that are required by the VPN software to create a VPN to the specified POD access device (PAD) connected to the POD.
   Following the creation of the above files, FIMS transmits the files, together with any other files or software required by the FSP to the nominated FSP (at the remote device 32) using any convenient communications method such as HTTPS download, email or file transfer protocol (FTP).
8. Using the information provided by the CM and made available by FIMS, the FSP can make contact with the First Responder using any convenient means such as phone or email. The FSP can discuss the case and, if required, can transmit the case paperwork (CP) to the first responder using links or facilities provided by FIMS or by more direct communication methods.
   It is expected that some time will elapse between step 8 and step 9 during which the first responder will use the details and instructions provided in the Case Paperwork or otherwise to gain physical access to the required storage media. The first responder will then notify the FSP using any convenient means that the storage media is available at the physical location of the POD. The first responder will then follow instructions provided in the case papers or by the FSP and will make the media available to an appropriate interface attached to the POD. In the case of a hard disk, the first responder may place the disk into a removable hard disk caddy and then place this caddy into the write protected bay of the drive unit which is attached to the POD.
   In the case of a CD or DVD, the first responder may place the media into a CD or DVD reader installed in the POD server. Other devices may be placed into or connected to write protected interfaces configured in the drive unit of the POD Server.
   If required, the first responder may be requested to place a clean hard disk into a removable drive caddy and subsequently to place this into the Read Write drive bay 16 of the drive unit 12 of the POD 10. This clean hard disk can be used to receive data copied from the media on which the services are being performed. If the services being performed include a forensic examination, this clean hard disk can be used to receive a forensic image of the media, a fundamental step in most forensic examinations, thus avoiding the need to transfer the data from the storage media across a network in order to obtain a forensic image.
9. When convenient, the FSP can initiate a connection to the PAD connected to the POD over any convenient network such as one using TCP/IP including the Internet or Intranet. Providing that the FSP is in possession of the appropriate Digital Certificate and POD access configuration file, the VPN server software running on the PAD will create a secure VPN connection across the TCP/IP network providing a secure connection to the POD.
10. In circumstances where the POD server is connected to IP controlled power management facilities, the PAD may automatically (or on the instruction of the FSP) transmit control messages to the POD server and/or the drive unit initiating them to be powered on.
11. In circumstances where the software installed on the POD server 18 requires software licence authentication provided by a physical dongle and that dongle is not present in the physical POD server 18, the PAD 20 or Pod Server 18 may connect to a device containing the software authentication device. Such a scenario is encountered where the software used supports access to a Network Authentication Service (NAS 28). In this situation, a VPN (with appropriate credentials) or other suitable connection to the NAS 28 is used to permit the POD server 18 to authenticate its software against a dongle or other licence management or authentication system installed in the NAS 28.
12. It is envisaged that there is a requirement to allow the POD 10 to create and update records stored in FIMS and for FIMS to control certain aspects of the POD activity. To facilitate this, a further VPN or other suitable connection is used between the POD 10 and a device running a VPN server which in turn is connected to FIMS using a private network connection (see also step 14). This permits a POD to transmit data to FIMS in a secure manner over any convenient network therefore maintaining the overall security of the environment.
13. Subsequent to the above steps being completed, the remote user 32 is able to issue commands from the computer connected to the POD 10 via the secure VPN to initiate a Terminal Services (TS) session using any suitable terminal services software. Using such a session it is possible for the remote user 32 to perform most, if not all, of the services that may be required using the system, without needing the transfer large volumes of the data being processed over the network to the computer 32 being used by the remote user. Examples of such tasks would be:
   a. Creating a forensic image of media attached to the write protected interface 14 onto a clean disk attached to the read/write interface 16 of the POD 10. In such circumstances, it is possible for the remote user 32 to initiate the forensic imaging process between the two devices installed in the remote POD 10 and then, once started, the remote user 32 can disconnect from the POD 10 and the VPN without affecting the operation running on the POD 10. Then, at some future time, the remote user 32 can re-connect to the POD 10 and continue to work on the remote forensic image.
   b. Connect to the POD 10 from any convenient network connection, including those not associated with or authorised to connect to the network on which the target computer that would normally contain the media to be examined is connected, and perform the services on media attached to either the read/write or the write protected interfaces 16 and 14 of the POD 10. Such network connections include wireless connections found in airports or hotels.
   c. Perform any of the required services from a remote location over any network without requiring the software needed to perform the services to be installed on the remote user's computer.
   d. Perform any of the required services without having to install anything on the target computer in which the storage media was stored.
14. From time to time FIMS may interrogate the status of the POD 10 using the VPN connection established between the POD 10 and the FIMS access device (FAD 26) which is a computer running a VPN server (see also step 12).
15. Upon completion of the provision of the services, the FSP may use the standard operating system commands available on the server to shut the server down. The FSP can then disconnect from the PAD 10.
16. At any time in the process so far described, the FSP may log into FIMS and record any desired notes in the case record. Such notes are stored together with a hash value to ensure data integrity. Following completion of the services, the FSP can use standard functions available in FIMS to set the status of the case or investigation as being completed.
17. At any time in the process so far described, the CM may log into FIMS and record any desired notes in the case record. The CM can also read any notes entered by the FSP associated with the case. All such notes are stored together with a hash value to ensure data integrity.
   Following the case record being marked as completed by the FSP, the CM can use standard functions available in FIMS to confirm the status of the case or investigation and mark it as being CLOSED.
18. At any time subsequent to the events listed above, FIMS can be used to generate reports which include, but are not limited to:
   a. Reports of all activities relating to a case or an investigation that was stored in FIMS. In such cases, the report may contain details of the hash values associated with every entry in FIMS.
   b. Reports relating to POD usage statistics.
   c. Reports relating to FSP usage statistics.
   d. Reports relating to Client usage statistics.

## Claims

1. A system for providing remote access to a storage device of a target device comprising
a network,
a workstation for examining the storage device from the target device, and comprising
a write protected device interface for receiving the storage device,
a processor connected to the device interface and arranged to execute one or more forensic analysis services on the storage device and
a gateway device connected to the processor and arranged to create and to manage secure private connections to and from the processor over the network,
and a remote device comprising
a network interface for connecting to the network, and
a processor connected to the network interface and arranged to transmit instructions to control the execution of one or more forensic analysis services of the workstation on the storage device.

2. A system according to claim 1, and further comprising a management server comprising a network interface for connecting to the network, and a processor connected to the network interface and arranged to transmit to the remote device access information to facilitate a network connection between the network interface of the remote device and the gateway device of the workstation.

3. A system according to claim 2, and further comprising an access
device, the access device connected to the management server and to the workstation, and arranged to transmit queries from the management server to the workstation.

4. A system according to claim 3, wherein the access device is arranged to maintain a secure connection between the management server and the workstation.

5. A system according to claim 2, 3 or 4, and further comprising a case management device, the case management device connected to the management server and arranged to transmit to the management server a message initiating access to the gateway device of the workstation.

6. A system according to any preceding claim, and further comprising an authentication server, the authentication server connected to the workstation, and arranged to authenticate software executed by the processor of the workstation.

7. A method of operating a system for providing remote access to a storage device of a target device comprising
receiving the storage device from the target device at a write protected device interface of a workstation,
establishing a secure and private connection, over a network, between a network interface of a remote device and a gateway device of the workstation,
transmitting instructions from the remote device to the workstation to control the execution of one or more forensic analysis services of the workstation on the storage device, and
executing one or more forensic analysis services on the storage device at the workstation according to the transmitted instructions.

8. A method according to claim 7, and further comprising operating a management service for providing case management and access control.

9. A method according to claim 8, and further comprising receiving an instruction at the management service initiating a case.

10. A method according to claim 9, and further comprising transmitting, from the management service to the remote device, details of the initiated case.

11. A method according to any one of claims 8 to 10, and further comprising transmitting queries from the management service to the workstation.

12. A method according to any one of claims 8 to 11, and further comprising transmitting updates from the workstation to the management service.

13. A workstation for examining a storage device from a target device comprising a write protected device interface for receiving the storage device, a processor connected to the device interface and arranged to execute one or more forensic analysis services on the storage device and a gateway device connected to the processor and arranged to create and to manage secure private connections to and from the processor over a network, to maintain a secure connection between the workstation and a remote device and to receive instructions from the remote device to control the execution of one or more forensic analysis services of the workstation on the storage device.

14. A workstation according to claim 13, and further comprising a read/write device interface for receiving a storage device.

15. A workstation according to claim 13 or 14, wherein the gateway device is arranged to maintain a secure connection between the workstation and a management server.

## Patentansprüche

1. Ein für den Fernzugriff auf ein Speichergerät eines Zielgeräts vorgesehenes System, das Folgendes umfasst:
ein Netzwerk,
einen Arbeitsplatz, um das Speichergerät vom Zielgerät aus zu untersuchen, wobei der Arbeitsplatz Folgendes umfasst:
eine schreibgeschützte Geräteschnittstelle zur Aufnahme des Speichergeräts,
einen mit der Geräteschnittstelle verbundenen Prozessor, der zur Ausführung eines oder mehrerer forensischen Analysenservices auf dem Speichergerät vorgesehen ist, und
ein an den Prozessor angeschlossenes Gateway-Gerät, das zum Herstellen und Managen sicherer privater Verbindungen über das Netzwerk vorgesehen ist, die zum und vom Prozessor führen,
und ein Remote-Gerät, zusammengesetzt aus:
einer Netzwerkschnittstelle zur Verbindung mit dem Netzwerk, und
einem mit der Netzwerkschnittstelle verbundenen Prozessor, der zur Übertragung von Anweisungen vorgesehen ist, um die Ausführung eines oder mehrerer forensischen Analysenservices des Arbeitsplatzes auf dem Speichergerät zu kontrollieren.

2. Ein Anspruch 1 entsprechendes System, das ferner einen Managementserver mit einer Netzwerkschnittstelle zur Verbindung mit dem Netzwerk und einen an die Netzwerkschnittstelle angeschlossenen Prozessor umfasst und so angeordnet ist, um Zugangsinformationen an das Remote-Gerät zu übermitteln und so eine Netzwerkverbindung zwischen der Netzwerkschnittstelle des Remote-Geräts und dem Gateway-Gerät des Arbeitsplatzes zu ermöglichen.

3. Ein Anspruch 2 entsprechendes System, das ferner ein Zugangsgerät umfasst, das an den Managementserver sowie an den Arbeitsplatz angeschlossen und zur Übermittlung von Abfragen vom Managementserver zum Arbeitsplatz vorgesehen ist.

4. Ein Anspruch 3 entsprechendes System, in dem das Zugangsgerät zur Aufrechterhaltung einer sicheren Verbindung zwischen dem Managementserver und dem Arbeitsplatz vorgesehen ist.

5. Ein Anspruch 2, 3 oder 4 entsprechendes System, das weiterhin ein Fallverwaltungsgerät umfasst, das an den Managementserver angeschlossen und zur Übermittlung einer Nachricht an diesen Managementserver angeordnet ist, um den Zugriff auf das Gateway-Gerät des Arbeitsplatzes einzuleiten.

6. Ein jeglichem vorstehenden Anspruch entsprechendes System, das weiterhin einen Authentifizierungsserver umfasst, der an den Arbeitsplatz angeschlossen und zur Authentifizierung der vom Prozessor des Arbeitsplatzes ausgeführten Software angeordnet ist.

7. Eine Methode zum Betrieb eines Systems, das den Fernzugriff auf ein Speichergerät eines Zielgeräts bereitstellt und Folgendes umfasst:
Empfang des Speichergeräts vom Zielgerät an einer schreibgeschützten Geräteschnittstelle eines Arbeitsplatzes,
Herstellung einer sicheren und privaten, über ein Netzwerk geführten Verbindung zwischen einer Netzwerkschnittstelle eines Remote-Geräts und einem Gateway-Gerät des Arbeitsplatzes,
Übermittlung von Anweisungen vom Remote-Gerät an den Arbeitsplatz, um die Ausführung eines oder mehrerer forensischen Analysenservices des Arbeitsplatzes auf dem Speichergerät zu kontrollieren, und
Ausführung eines oder mehrerer forensischen Analysenservices auf dem Speichergerät am Arbeitsplatz in Übereinstimmung mit den übermittelten Anweisungen.

8. Eine Anspruch 7 entsprechende Methode, die ferner den Betrieb eines Managementservices zur Bereitstellung der Fallverwaltung und der Zugriffskontrolle umfasst.

9. Eine Anspruch 8 entsprechende Methode, die weiterhin den Empfang einer Anweisung am Managementservice zur Einleitung eines Falls umfasst.

10. Eine Anspruch 9 entsprechende Methode, die ferner die Übermittlung von Details des eingeleiteten Falls vom Managementservice zum Remote-Gerät umfasst.

11. Eine jeglichen Ansprüchen von 8 bis 10 entsprechende Methode, die weiterhin die Übermittlung von Abfragen vom Managementservice an den Arbeitsplatz umfasst.

12. Eine jeglichen Ansprüchen von 8 bis 11 entsprechende Methode, die ferner die Übermittlung von Aktualisierungen vom Arbeitsplatz an den Managementservice umfasst.

13. Ein Arbeitsplatz zur Untersuchung eines Speichergeräts von einem Zielgerät, der eine schreibgeschützte Geräteschnittstelle zur Aufnahme des Speichergeräts, einen mit der Geräteschnittstelle verbundenen Prozessor, der zur Ausführung eines oder mehrerer forensischen Analysenservices auf dem Speichergerät angeordnet ist, und ein Gateway-Gerät umfasst, das an den Prozessor angeschlossen und zum Herstellen sowie Managen sicherer privater Verbindungen an den und vom Prozessor über ein Netzwerk vorgesehen ist, um eine sichere Verbindung zwischen dem Arbeitsplatz und einem Remote-Gerät aufrecht zu erhalten und vom Remote-Gerät Anweisungen zum Kontrollieren der Ausführung eines oder mehrerer forensischen Analysenservices des Arbeitsplatzes auf dem Speichergerät zu empfangen.

14. Ein Anspruch 13 entsprechender Arbeitsplatz, der ferner eine Readwrite-Geräteschnittstelle zur Aufnahme eines Speichergeräts umfasst.

15. Ein Anspruch 13 oder 14 entsprechender Arbeitsplatz, in dem das Gateway-Gerät zur Aufrechterhaltung einer sicheren Verbindung zwischen dem Arbeitsplatz und einem Managementserver vorgesehen ist.

## Revendications

1. Système de fourniture d'accès à distance à un dispositif de stockage d'un dispositif cible comprenant
un réseau,
un poste de travail servant à examiner le dispositif de stockage depuis le dispositif cible et comprenant
une interface de couplage de dispositif protégé en écriture servant à recevoir le dispositif de stockage,
un processeur connecté à l'interface de couplage de dispositif et adapté à exécuter un ou plusieurs services d'analyses judiciaires sur le dispositif de stockage et
un dispositif de passerelle connecté au processeur et adapté à créer et à gérer des connexions privées sécurisées vers et depuis le processeur sur le réseau,
et un dispositif distant comprenant
une interface de réseau assurant la connexion au réseau, et
un processeur connecté à interface de réseau et adapté à transmettre des instructions afin de contrôler l'exécution d'un ou de plusieurs services d'analyses judiciaires du poste de travail dans le dispositif de stockage.

2. Système selon la revendication 1, et comprenant en outre un serveur de gestion consistant en une interface de réseau assurant une connexion au réseau et un processeur connecté à l'interface de réseau et adapté à transmettre au dispositif distant des informations permettant de faciliter une connexion au réseau entre l'interface de réseau du dispositif distant et le dispositif de passerelle du poste de travail.

3. Système selon la revendication 2, et comprenant en outre un dispositif d'accès, le dispositif d'accès étant connecté au serveur de gestion et au poste de travail et étant adapté à transmettre des requêtes depuis le serveur de gestion vers le poste de travail.

4. Système selon la revendication 3, dans lequel le dispositif d'accès est adapté à maintenir une connexion sécurisée entre le serveur de gestion et le poste de travail.

5. Système selon la revendication 2, 3 ou 4, et comprenant en outre un dispositif de gestion de procédures, le dispositif de gestion de procédures étant connecté au serveur de gestion et étant adapté à transmettre au serveur de gestion un message permettant d'accéder au dispositif de passerelle du poste de travail.

6. Système selon l'une quelconque des revendications précédentes, et comprenant en outre un serveur d'identification, le serveur d'identification étant connecté au poste de travail et étant adapté à identifier le logiciel exécuté par le processeur du poste de travail.

7. Procédé d'exploitation d'un système permettant de fournir un accès à distance à un dispositif de stockage d'un dispositif cible comprenant les étapes consistant à
recevoir le dispositif de stockage du dispositif cible sur une interface de couplage de dispositif protégé en écriture d'un poste de travail,
établir une connexion sécurisée et privée sur un réseau, entre une interface de réseau d'un dispositif distant et un dispositif de passerelle d'un poste de travail,
transmettre des instructions depuis le dispositif distant vers le poste de travail afin de contrôler l'exécution d'un ou de plusieurs services d'analyses judiciaires du poste de travail dans le dispositif de stockage, et
exécuter un ou plusieurs services d'analyses judiciaires dans le dispositif de stockage du poste de travail en fonction des instructions transmises.

8. Procédé selon la revendication 7, et comprenant en outre l'exploitation d'un service de gestion pour la fourniture d'une gestion de procédures et d'un contrôle d'accès.

9. Procédé selon la revendication 8, et comprenant en outre la réception d'une instruction engageant une procédure dans le service de gestion.

10. Procédé selon la revendication 9, et comprenant en outre la transmission, depuis le service de gestion vers le dispositif distant, de détails de la procédure engagée.

11. Procédé selon l'une quelconque des revendications 8 à 10, et comprenant en outre la transmission de requêtes depuis le service de gestion vers le poste de travail.

12. Procédé selon l'une quelconque des revendications 8 à 11, et comprenant en outre la transmission de mises à jour depuis le poste de travail vers le service de gestion.

13. Poste de travail servant à examiner un dispositif de stockage depuis un dispositif cible comprenant une interface de couplage de dispositif protégé en écriture adapté à recevoir le dispositif de stockage, un processeur connecté à l'interface de couplage de dispositif et adapté à exécuter un ou plusieurs services d'analyses judiciaires dans le dispositif de stockage et un dispositif de passerelle connecté au processeur et adapté à créer et à gérer des connexions privées sécurisées vers et depuis le processeur sur un réseau, à maintenir une connexion sécurisée entre le poste de travail et un dispositif distant et à recevoir des instructions depuis le dispositif distant afin de contrôler l'exécution d'un ou de plusieurs services d'analyses judiciaires du poste de travail dans le dispositif de stockage.

14. Poste de travail selon la revendication 13, et comprenant en outre une interface de couplage de dispositif de lecture/écriture servant à recevoir un dispositif de stockage.

15. Poste de travail selon la revendication 13 ou 14, dans lequel le dispositif de passerelle est adapté à maintenir une connexion sécurisée entre le poste de travail et un serveur de gestion.
